# FASCICULE DE BREVET EUROPEEN

(11) **EP 0 477 349 B1**
(45) Date de publication et mention de la délivrance du brevet: **05.10.1994**
(21) Numéro de dépôt: 91908525.8
(22) Date de dépôt: 02.04.1991
(51) Int. Cl.: B63C 7/20, F16L 1/16, B63B 22/02

(54) **DISPOSITIF POUR L'ABANDON ET LA RECUPERATION D'UNE CHARGE LOURDE SUR FOND MARIN**
GERÄT ZUM ABSETZEN EINER SCHWEREN LAST AUF DEM SEEBODEN UND ZUM ZURÜCKHOLEN DERSELBEN
DEVICE FOR DEPOSITING AND RECOVERING A HEAVY LOAD ON THE OCEAN FLOOR

(30) Priorité: 30.03.1990 FR 9004098
(43) Date de publication de la demande: 01.04.1992
(73) Titulaire: COFLEXIP, 92100 Boulogne-Billancourt (FR)
(72) Inventeur: MALOBERTI, René, F-94500 Champigny (FR); COUTAREL, Alain, F-75007 Paris (FR); JAHANT, Guy, F-95770 St Clair s/Epte (FR)
(74) Mandataire: Nony, Michel
(86) Numéro de dépôt international: FR9100265
(87) Numéro de publication internationale: WO9115397

(56) Documents cités:
- GB-A- 560 796
- US-A- 2 986 750
- US-A- 3 032 125
- US-A- 4 109 728
- US-A- 4 547 163

## Description

La présente invention a pour objet un dispositif pour l'abandon et la récupération d'une charge lourde sur le fond marin, et plus particulièrement un tel dispositif permettant la dépose d'une charge telle qu'un flexible à abandonner ou un corps mort à l'aide d'une ligne de descente ou d'abandon telle qu'un câble, une chaîne ou une conduite tubulaire flexible et autorisant sa récupération ultérieure en particulier dans de grandes profondeurs d'eau.

L'invention vise également à assurer que l'élément utilisé pour la reconnexion est toujours accessible même en cas de sol très mou dans lequel le corps déposé se serait enfoncé totalement ou partiellement.

Actuellement, ces travaux sont souvent réalisés par des plongeurs, mais cette solution présente l'inconvénient d'entraîner des coûts de main-d'oeuvre élevés et de ne pouvoir en outre être mis en oeuvre à grande profondeur.

On a également utilisé des déconnecteurs tels que des coupe-câbles pour l'abandon de la charge, la reprise pour relevage étant réalisée à l'aide d'un véhicule sous-marin téléguidé manipulant un crochet descendu avec la ligne de relevage.

Cette solution présente l'inconvénient de ne pouvoir être utilisée pour de très fortes charges du fait de la taille des accessoires d'accastillage à manipuler. En outre, la reconnexion avec la charge abandonnée au fond risque d'être difficile dans le cas où le fond est constitué par un sol mou.

On peut également maintenir l'extrémité de la ligne d'abandon en flottaison entre le fond et la surface en utilisant un orin ou un câble relié à une bouée de subsurface, elle-même reliée par un câble à une bouée de marquage en surface à l'aide de laquelle s'effectue la récupération.

Dans ce cas, l'accastillage est compliqué et la bouée de surface risque d'être emportée par un navire ou une tempête. En outre la ligne d'orins doit être de grande longueur et de forte capacité dans le cas de charges lourdes dans de grandes profondeurs d'eau.

La présente invention vise à pallier ces inconvénients.

A cet effet, l'invention a pour objet un dispositif pour l'abandon et la récupération d'une charge lourde sur le fond marin selon la revendication 1.

On entend par cylindre une surface engendrée par une droite dite génératrice assujettie d'une part à rester parallèle à une direction fixe et d'autre part, à rencontrer une courbe plane fixe dite directrice. De préférence, les surfaces cylindriques en regard l'une par rapport à l'autre permettant de réaliser l'encastrement desdits éléments de raccordement présentent la forme des cylindres circulaires.

Selon l'invention, ladite deuxième partie comprend des moyens de flottaison de façon à présenter une flottabilité positive et des moyens souples de liaison à ladite charge.

La flottabilité positive permet d'assurer l'accessibilité à la deuxième partie même lorsque le corps à récupérer est enfoncé dans le fond marin. Avantageusement, la deuxième partie est réalisée de telle sorte que l'axe défini par son centre de poussée P et son centre de gravité G soit parallèle aux génératrices des éléments cylindriques de raccordement, et que le centre de poussée P se trouve, par rapport au centre de gravité G, du côté de l'extrémité supérieure de la deuxième partie qui comporte la face avant supérieure de l'élément cylindrique de raccordement, le centre de gravité G se trouvant par rapport au centre de poussée P du côté de l'extrémité inférieure qui comporte l'organe de raccordement avec les moyens souples de liaison à la charge. On assure ainsi la verticalité de l'élément cylindrique de raccordement (mandrin, ou cylindre de réception selon le mode de réalisation adopté) de la deuxième partie, ce qui facilite l'introduction du mandrin dans le cylindre de réception.

La charge abandonnée sur le fond joue le rôle de lest retenant ladite deuxième partie à flottabilité positive à proximité du fond par l'intermédiaire desdits moyens souples de liaison.

Avantageusement, l'une des deux parties comprend un mandrin cylindrique et l'autre partie comprend un cylindre de réception pour ledit mandrin, les moyens de vérouillage et de déverrouillage avantageusement hydraulique, sont disposés dans lesdits mandrins cylindriques de réception. Le mandrin peut être monté sur la première ou la deuxième partie.

Avantageusement, l'une des parties comprend un cône d'entrée pour faciliter le guidage du mandrin porté par l'autre. Plus particulièrement, le mandrin peut être monté sur la première partie, la deuxième partie comprenant le cylindre de réception et un cône d'entrée pour le mandrin.

Dans un mode de réalisation avantageux, l'un des deux éléments cylindriques de raccordement comporte au moins un moyen mobile de verrouillage tel qu'un cliquet ou un loquet basculant, travaillant en coopération avec un moyen statique de verrouillage intégré à l'autre élément cylindrique de raccordement et consistant en une cavité réalisée dans la paroi de l'élément cylindrique, telle qu'une encoche ou de préférence une rainure ou une gorge circulaire.

Dans un mode de réalisation particulier de l'invention, les moyens de verrouillage comprennent au moins un organe susceptible de faire saillie du mandrin pour pénétrer dans une cavité réalisée dans la paroi du cylindre de réception.

Cet organe peut être monté basculant à l'intérieur du mandrin, des moyens élastiques étant prévus pour le maintenir en position sortie, et un piston étant agencé pour l'amener en position rentrée contre l'action de moyens élastiques.

Le même mandrin peut être utilisé pour l'abandon et la récupération de la charge mais, dans un mode de réalisation particulier, on prévoit un mandrin distinct pour la récupération, les moyens de verrouillage de ce mandrin comprenant une rainure annulaire formée à sa surface extérieure agencée pour coopérer avec des loquets montés pivotants sur le cylindre de réception. Les moyens de verrouillage de la première partie peuvent notamment être alimentés en énergie à partir de la ligne d'abandon et/ou de récupération, par exemple en énergie électrique ou hydraulique. Dans ce dernier cas, la ligne est constituée par une conduite tubulaire flexible.

On peut prévoir, afin d'assurer l'entrée du mandrin dans son cylindre de réception, un câble ou une élingue traversant ledit cône d'entrée et le cylindre de réception et comprenant des moyens d'accrochage à l'extrémité du mandrin d'une part, et à l'extrémité d'un câble de traction d'autre part.

On décrira maintenant à titre d'exemple non limitatif un mode de réalisation particulier de l'invention en référence aux dessins schématiques annexés dans lesquels :
- les figures 1 à 3 représentent trois étapes successives de la phase d'abandon d'un flexible sur le fond marin,
- les figures 4 à 7 représentent quatre étapes successives de la phase de récupération de ce flexible,
- la figure 8 est une vue partielle à plus grande échelle en demi-coupe axiale du mandrin d'abandon,
- la figure 9 est une vue en élévation du mandrin de récupération,
- la figure 10 est une vue partielle en coupe axiale de ce mandrin dans son cylindre de réception, et
- la figure 11 représente une variante de réalisation du dispositif selon la présente invention.

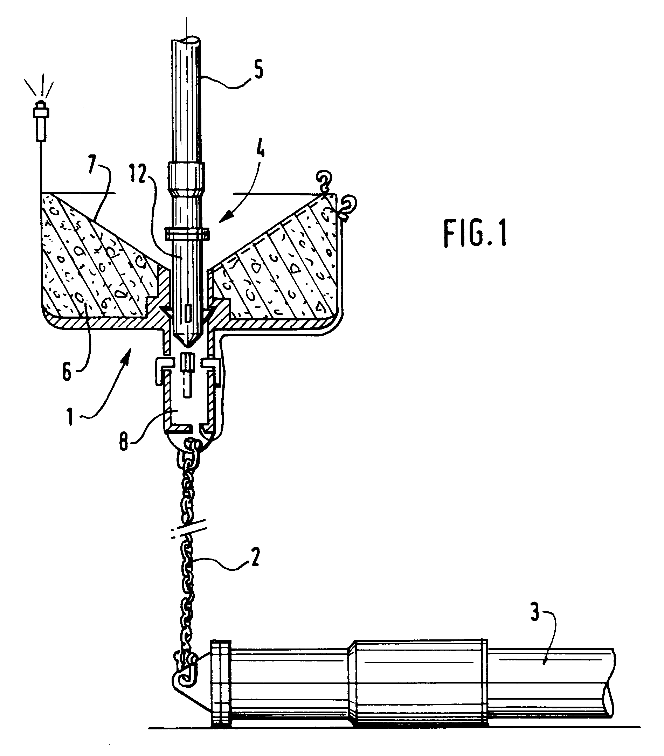

Sur les figures 1 à 11 on a utilisé les mêmes références pour désigner les mêmes éléments.

Comme montré à la figure 1, le deuxième dispositif selon l'invention comprend d'une manière générale une partie 1 reliée par une chaîne 2 à un flexible 3 à abandonner sur le fond marin et une première partie 4 reliée, par exemple par bride, à l'embout 38 qui constitue d'extrémité inférieure d'une ligne d'abandon 5 constituée dans le cas présent par un tuyau flexible pouvant être mis en pression.

La partie 1 comprend un cylindre de réception 8, de section circulaire, et d'axe vertical, dont l'extrémité supérieure est ouverte et raccordée à l'extrémité inférieure d'un cône de rentrée 7 coaxiale avec le cylindre 8 évasé vers le haut.

Le cône de rentrée 7 est constitué par la surface externe supérieure d'un élément de flottabilité 6 qui permet à la partie 1 d'avoir une flottabilité positive permettant de maintenir tendue la chaîne 2, de sorte que même lorsque le flexible 3 est enfoncé dans le sol, la partie 1 soit accessible et que l'axe du cône soit vertical.

Le cône de rentrée 7 présente donc son ouverture vers le haut.

La paroi intérieure de ce cylindre forme dans sa partie supérieure une gorge circulaire 9 dont la section présente un tronçon supérieur droit perpendiculaire du cylindre 8.

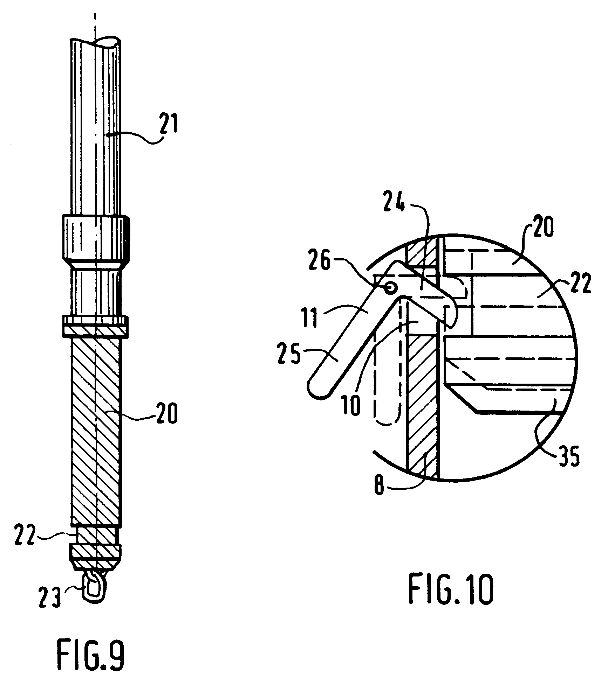

Par ailleurs, ce cylindre 8 présente dans sa partie inférieure des ouvertures 10 dans lesquels sont montés des loquets 11 comme cela sera décrit plus en détail ci-après (figure 10).

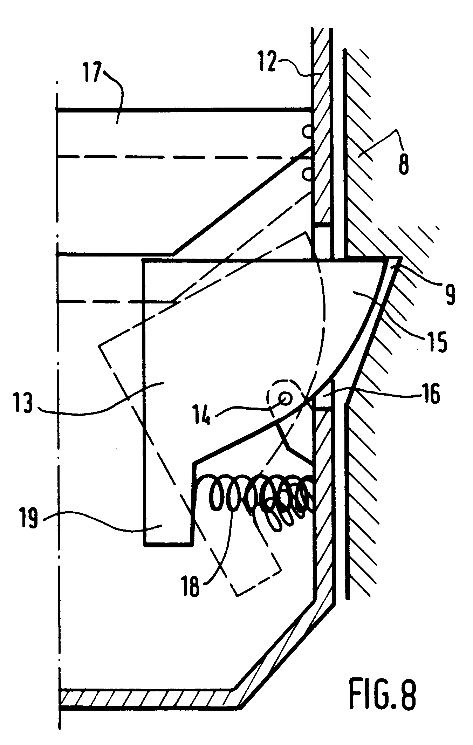

Si l'on se réfère de nouveau aux figures 1 et 8, on voit que la partie 4 comporte un mandrin 12 creux dont la surface extérieure est de forme cylindrique circulaire d'axe vertical et de diamètre légèrement inférieur au diamètre intérieur du cylindre de réception 8. Des cliquets 13 sont montés pivotants autour d'axes horizontaux 14 solidaires du mandrin 12. Dans la position représentée en traits pleins, les cliquets 11 ont leur extrémité 15 faisant saillie du mandrin par des ouvertures 16 dans la paroi de ce mandrin, tandis que dans leur position en traits interrompus, cette extrémité 15 rentre à l'intérieur du mandrin.

Par ailleurs, un piston pousseur 17 est monté dans le mandrin 12, l'espace intérieur du mandrin 12 constitue une chambre cylindrique dans laquelle le piston 17 peut coulisser et qui est en communication avec le conduit intérieur du flexible 5.

Enfin, un ressort 18 disposé en compression entre la paroi du mandrin 12 et un levier 19 formant une queue du cliquet 13 repousse celui-ci dans sa position sortie du mandrin.

Par conséquent, en l'absence de pression dans le flexible 5, le piston 17 et les cliquets 13 sont dans leur position représentée en traits pleins, les cliquets 13 étant en saillie, alors que lorsqu'une pression est appliquée dans ce flexible, le piston 17 descend dans la position représentée en traits interrompus et fait ainsi basculer les cliquets 13 dont l'extrémité 15 rentre à l'intérieur du mandrin.

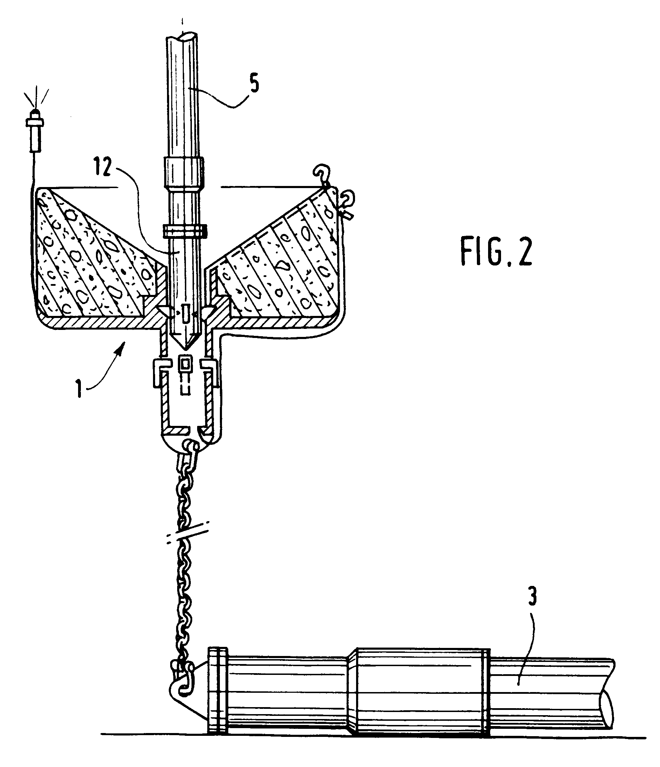

Si l'on revient maintenant à la figure 1, on voit la fin de l'opération de dépose du flexible 3 avec les cliquets 13 du mandrin 12 engagés dans la gorge 9 du cylindre 8, la face supérieure de l'extrémité 15 des cliquets 13 venant en butée contre la portée constituée par la face horizontale annulaire que présente la partie supérieure de la gorge 9. Grâce à cette disposition, le cylindre 8 est maintenu verrouillé dans le mandrin 12 et la conduite flexible 3 à abandonner est suspendue au flexible d'abandon 5 par l'extrémité de la chaîne 2, et des parties 1 et 4 solidarisées par des cliquets 13. Lorsque l'extrémité de la conduite tubulaire flexible 3 à abandonner, raccordée à la chaîne 2, est posée sur le fond, une pression est appliquée à l'intérieur du flexible 5, le piston 17 provoque la rentrée des cliquets à l'intérieur du mandrin 12 comme cela est représenté à la figure 2.

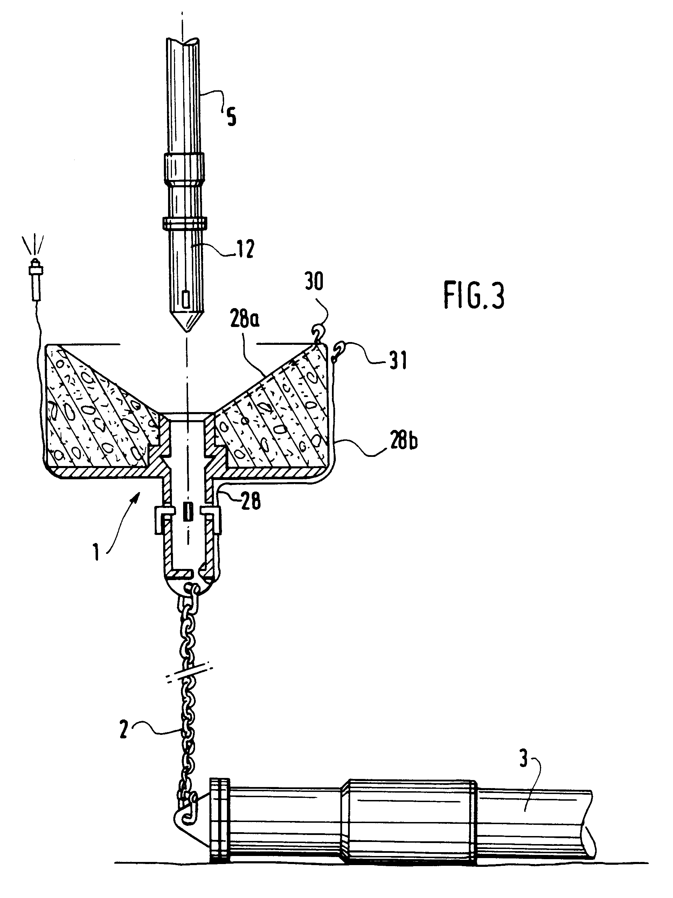

Le mandrin 12 est ainsi désolidarisé de la partie 1 du dispositif selon l'invention et peut donc être remonté par enroulement en surface de la conduite tubulaire flexible 5 comme cela est représenté à la figure 3. Seule la partie 1 reste par conséquent reliée à l'extrémité de la conduite tubulaire flexible 3 par la chaîne 2 en attente de sa récupération. Grâce à l'élément de flottabilité 6, la partie 1 possède une flottabilité suffisante pour soulever au moins une partie de la chaîne 2 dont la longueur peut être ajustée en fonction des circonstances de l'opération. De préférence, la chaîne 2 est complètement tendue. Avantageusement, la zone inférieure de la partie 1 comporte des éléments métalliques jouant le rôle de lest et abaissant son centre de gravité, en particulier l'extrémité arrière inférieure du cylindre de réception 8 et le gousset auquel est raccordée la chaîne 2, tandis qu'un élément de flottaison 6 se trouve dans la zone supérieure comportant l'extrémité antérieure supérieure du cylindre 8 et le cône de guidage 7, ce qui a pour effet de situer le centre de poussée de la partie 1 à une distance suffisante au-dessus de son centre de gravité. La partie 1 , maintenue par la chaîne 2, se trouve ainsi dans une position au-dessus du fond et une orientation stable, avec l'axe de cylindre 8 et du cône de guidage 7 restant à peu prés vertical, l'extrémité libre évasée du cône 7 constituant la face supérieure de la partie 1.

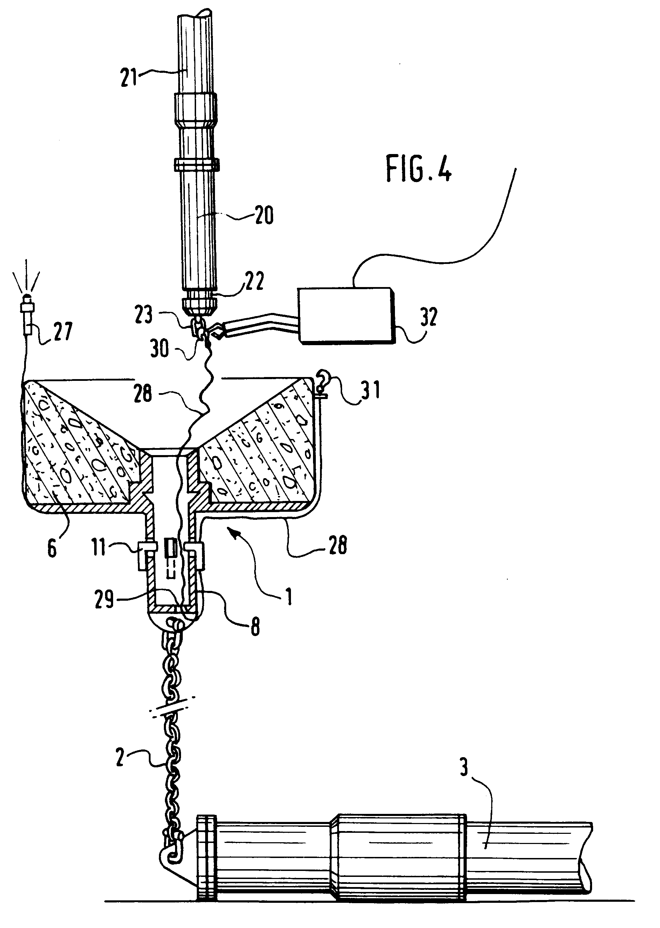

Si l'on se réfère maintenant aux figures 4 et 9, on voit que l'on utilise pour cette récupération un mandrin 20 différent du mandrin 12 et relié à sa partie supérieure à une ligne de relevage 21, qui peut être la même que la conduite tubulaire flexible d'abandon 3 ou qui peut être une ligne flexible différente.

Le mandrin 20 présente une surface extérieure cylindrique, de préférence cylindrique circulaire, comportant à sa partie inférieure une gorge annulaire 22 et est muni d'un anneau 23 à son extrémité inférieure 35.

Si l'on se réfère maintenant à la figure 10, on voit que les loquets 11 se présentent sous la forme de leviers à deux branches 24 et 25 et sont montés pivotant autour d'un axe horizontal 26 solidaire du cylindre 8.

Dans la position représentée en traits pleins, la branche 24 du loquet est basculée vers l'extérieur du cylindre 8 alors que dans la position représentée en traits interrompus, la force de gravité s'exerçant sur la branche 25 du loquet provoque la rentrée de la branche 24 en saillie à l'intérieur du cylindre 8 à travers l'ouverture 10.

La figure 4 représente le mandrin 20 approché de l'entrée du cône de rentrée 6, cette approche étant facilitée à l'aide d'une balise sonar 27.

Une élingue 28 a été disposée sur la partie 1 préalablement à son abandon, de telle manière qu'elle traverse un orifice 29 formé au fond du cylindre 8.

Le brin 28a de l'élingue intérieure a la partie 1 à son extrémité munie d'un crochet 30 et le brin 28b extérieur a son extrémité munie d'un crochet 31.

Le mandrin 20 ayant été approché de la partie 1, un véhicule sous-marin téléguidé 32 décroche le crochet 30 de la partie 1 et l'accroche à l'anneau 23 du mandrin 20.

La face inférieure de la gorge 22 du mandrin 20 présente la forme d'un anneau circulaire dans un plan perpendiculaire à l'axe vertical du vérin, et constitue une portée sur laquelle viennent s'appuyer les extrémités.

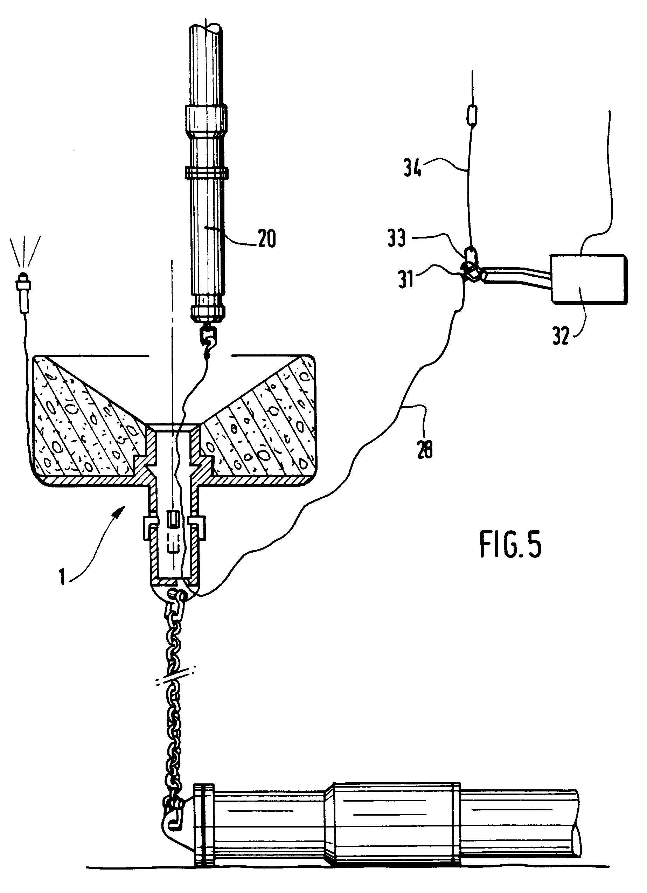

Comme montré sur la figure 5, il décroche ensuite le crochet 31 pour l'accrocher à un anneau 33 relié par un câble de traction 34 à un treuil situé en surface.

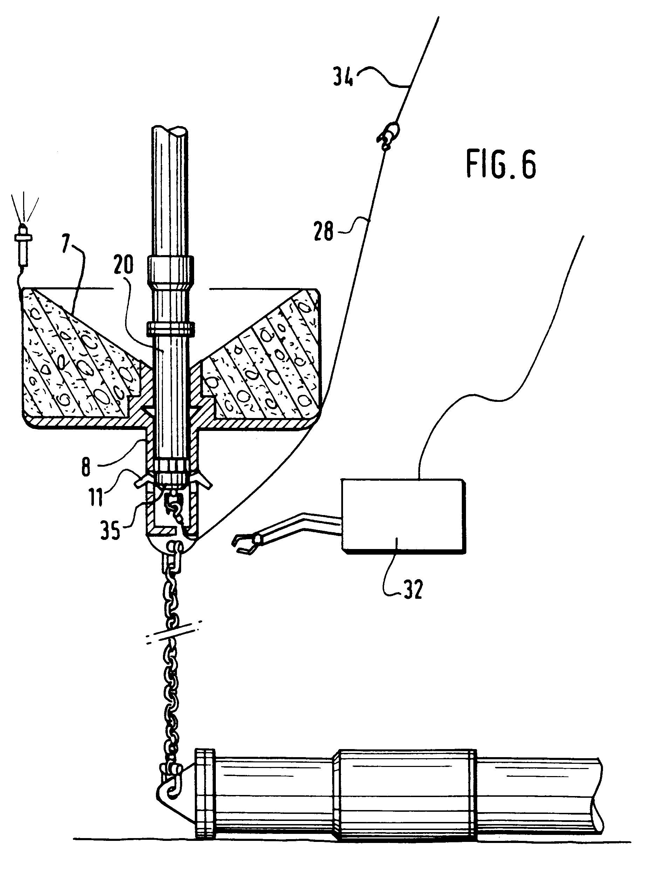

Une traction étant exercée sur le câble 34, comme montré à la figure 6, l'élingue 28 se tend et guide le mandrin 20 à l'intérieur du cône de rentrée 7 puis dans le cylindre 8.

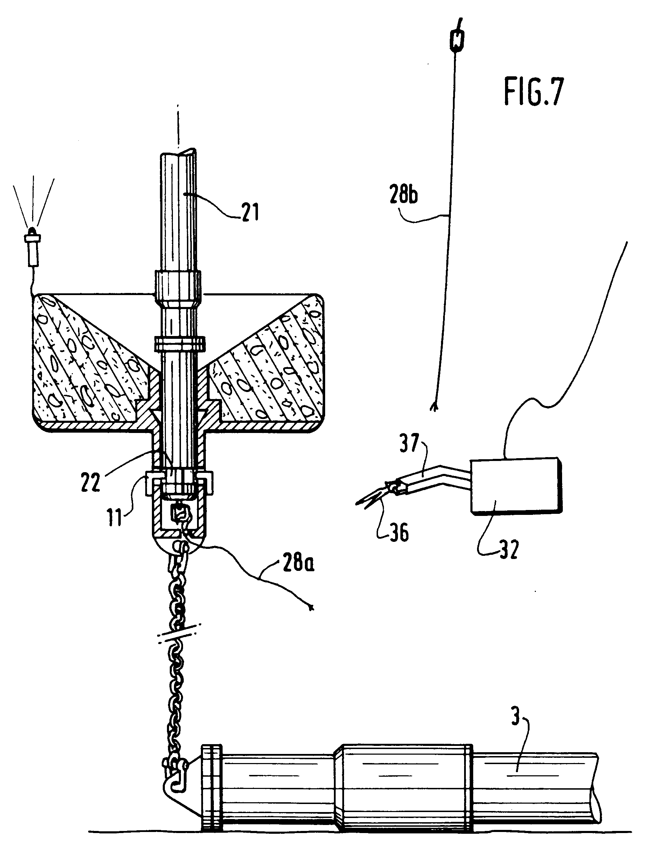

Au passage de l'extrémité inférieure 35 du mandrin 20, les branches 24 des loquets 11 s'escamotent puis, comme montré à la figure 7, ils repivotent de manière à s'engager dans la rainure 22. La position des loquets peut être vérifiée à l'aide du véhicule 32.

La face inférieure de la gorge 22 du mandrin 20 présente la forme d'un anneau circulaire dans un plan perpendiculaire à l'axe vertical du vérin et constitue une portée sur laquelle viennent en appui les extrémités des faces inférieures des branches 24 des loquets 11.

Lorsque le verrouillage est réalisé, le véhicule 32 peut couper l'élingue 28 à l'aide d'un outil 36 fixé à l'extrémité de son bras manipulateur 37.

Le dispositif est alors en position pour relever l'extrémité de la conduite tubulaire du flexible 3 par traction sur la ligne de relevage 21.

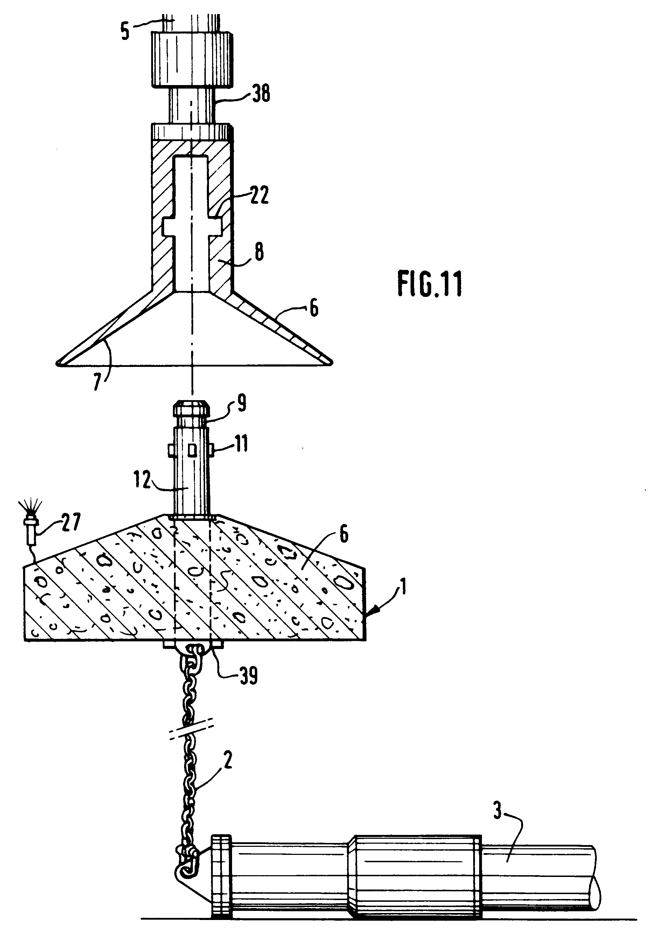

Dans l'exemple de réalisation illustré sur la figure 11, la surface conique de guidage 7 est intégrée à la dernière partie susceptible d'être liée mécaniquement à la ligne d'abandon et de récupération 5 et non pas à la première partie liée à la charge 3. La liaison de la deuxième partie est reliée par exemple par bride à l'embout 38 constituant l'extrémité inférieure de la ligne d'abandon 5. Dans l'exemple de la figure 11, la dernière partie 1 est liée à la charge à récupérer 3 par l'intermédiaire de la chaîne 2, une réserve de flottabilité assurant une flottabilité positive à la deuxième partie. La deuxième partie 1 peut comporter un lest 39, placé dans sa partie inférieure.

Dans la variante illustrée sur la figure 11, le mandrin 12 est intégré à la seconde partie 1 et le cylindre de réception 8 à la partie 2.

Il est bien entendu que le dispositif de la figure 11 peut être équipé avec tous les équipements du dispositif illustré sur la figure 1 à 10 et notamment des elingues facilitant le raccordement dans deux parties. De plus, une commande hydraulique étant avantageusement assurée par la conduite tubulaire flexible 5, le dispositif commandé hydrauliquement se trouve avantageusement disposé dans la seconde partie, supérieure du dispositif.

Diverses variantes et modifications peuvent bien entendu être apportées à la description qui précède sans sortir pour autant du cadre ni de l'esprit de l'invention.

L'invention s'applique principalement à la récupération sur le fond marin, notamment à des profondeurs de l'ordre de 1.000 mètres, des conduites tubulaires flexibles 3 dont la pose a dû être interrompue de toute urgence par leur abandon sur le fond, par exemple en cas de tempête.

## Revendications

1. Dispositif pour l'abandon et la récupération d'une charge (3) sur un fond marin du type comportant une ligne de manoeuvre (5,21) de ladite charge à partir de la surface, une première partie (4) reliée à l'extrémité inférieure de ladite ligne de manoeuvre, une deuxième partie (1) ayant une flottabilité positive et reliée à ladite charge (3), et des moyens de verrouillage coopérants (9,13;11,22) sur lesdites première et deuxième parties, caractérisé par le fait que pour l'abandon et la récupération d'une charge lourde (3) sur un fond marin ladite deuxième partie (1) est disposée à proximité du fond marin et est liée mécaniquement à ladite charge lourde (3) par des moyens de liaison souples et allongés (2), ladite charge lourde (3), lorsqu'elle est sur le fond marin, constituant un lest retenant ladite deuxième partie (1) à proximité du fond marin par l'intermédiaire desdits moyens de liaison (2), et que lesdites première (4) et deuxième (1) parties comprennent des éléments cylindriques (8,12) de raccordement susceptibles d'être encastrés l'un dans l'autre et verrouillés mutuellement par lesdits moyens de verrouillage, de manière à permettre à l'ensemble constitué par lesdites première et seconde parties, lorsqu'elles sont assemblées, de supporter le poids de ladite charge lourde lorsque celle-ci est déplacée entre le fond marin et la surface par actionnement de ladite ligne de manoeuvre.

2. Dispositif selon la revendication 1, caractérisé par le fait que l'axe passant par le centre de poussée P et le centre de gravité G de la deuxième partie (1) est parallèle aux génératrices de l'élément cylindrique de raccordement et que le centre de poussée P se trouve, par rapport au centre de gravité G, du côté de l'extrémité supérieure de la deuxième partie (1).

3. Dispositif selon la revendication 1 ou 2, caractérisé par le fait que l'une desdites parties comprend un mandrin (12,20) cylindrique de base circulaire et l'autre partie comprend un cylindre de base circulaire (8) de réception pour ledit mandrin, permettant l'encastrement du mandrin dans le cylindre de réception et que les moyens de verrouillage (9,13;10,11) sont disposés sur le mandrin ou dans son cylindre de réception pour verrouiller et déverrouiller ledit mandrin dans son cylindre de réception.

4. Dispositif selon la revendication 3, caractérisé par le fait que le mandrin est monté sur ladite première partie.

5. Dispositif selon la revendication 3, caractérisé par le fait que ledit mandrin est monté sur ladite deuxième partie.

6. Dispositif selon l'une quelconque des revendications 1 à 5, caractérisé par le fait que la partie comprenant le cylindre de réception comporte un cône d'entrée (7) pour l'autre desdites parties.

7. Dispositif selon les revendications 2 et 6, caractérisé par le fait que ledit cône d'entrée est monté sur ladite deuxième partie (1).

8. Dispositif selon l'une quelconque des revendications 1 à 7, caractérisé par le fait qu'il comporte des moyens de verrouillage alimentés en énergie à partir de ladite ligne de manoeuvre.

9. Dispositif selon l'ensemble des revendications 1 à 8, caractérisé par le fait que les moyens de verrouillage comprennent au moins un organe (13) susceptible de faire saillie du mandrin pour pénétrer dans une ouverture (9) du cylindre de réception.

10. Dispositif selon l'ensemble des revendications 8 et 9, caractérisé par le fait que ledit organe est monté basculant à l'intérieur du mandrin, des moyens élastiques (18) étant prévus pour le maintenir en position sortie, et un piston (17) étant agencé pour l'amener en position rentrée contre l'action des moyens élastiques, ledit piston étant déplacé sous l'effet de la pression d'un fluide hydraulique véhiculé par une ligne d'abandon constituée par une conduite tubulaire flexible.

11. Dispositif selon l'une quelconque des revendications 1 à 8, caractérisé par le fait que les moyens de verrouillage comprennent une gorge annulaire (22) formée sur le mandrin, agencée pour coopérer avec des loquets (11)montés pivotants sur le cylindre de réception.

12. Dispositif selon l'une quelconque des revendications 1 à 11, caractérisé par le fait qu'il comprend un câble (28), traversant le cylindre de réception, et comprenant à chacune de ses extrémités des moyens d'accrochage (30,31) susceptibles d'être raccordés respectivement à l'extrémité du mandrin et à l'extrémité d'un câble de traction.

## Claims

1. Device for depositing and recovering a load (3) on the ocean floor of the type comprising a line (5,21) for handling said load from the surface, a first part (4) connected to the lower end of said handling line, a second part (1) having a positive buoyancy and connected to said load (3), and cooperating locking means (9,13;11,22) on said first and second parts, characterized in that for depositing and recovering a heavy load (3) on the ocean floor said second part (1) is located in the vicinity of the ocean floor and is mechanically connected to said heavy load (3) by flexible and elongated connecting means (2), wherein said heavy load (3) when resting on the ocean floor forms a ballast retaining said second part (1) in the vicinity of the ocean floor through said connecting means (2), and in that said first (4) and second (1) parts comprise cylindrical joining elements (8,12) capable of being fitted one in the other and mutually locked by said locking means, wherein the assembly constituted by said first and second parts when fitted together is thus able to support the weight of said heavy load when said load is moved between the ocean floor and the surface upon actuation of said handling line.

2. Device according to claim 1, characterized in that the axis passing through the centre of thrust (P) and the centre of gravity (G) of the second part (1) is parallel to the generatrices of the cylindrical joining element and that the centre of thrust (P) is located relative to the centre of gravity (G) on the side of the upper end of the second part (1).

3. Device according to claim 1 or 2, characterized in that one of the said parts includes a cylindrical mandrel (12, 20) with a circular base and the other part includes a cylinder (8) with a circular base for receiving the said mandrel, allowing the mandrel to be fitted in the receiving cylinder and that the locking means (9, 13; 10, 11) are disposed on the mandrel or in its receiving cylinder for locking and unlocking the said mandrel in its receiving cylinder.

4. Device according to claim 3, characterized in that the mandrel is mounted on the said first part.

5. Device according to claim 3, characterized in that the said mandrel is mounted on the said second part.

6. Device according to any one of claims 1 to 5, characterized in that the part comprising the receiving cylinder includes an inlet cone (7) for the other of the said parts.

7. Device according to claims 2 and 6, characterized in that the said inlet cone is mounted on the said second part (1).

8. Device according to any one of claims 1 to 7, characterized in that it includes locking means whose energy is supplied from the said handling line

9. Device according to the set of claims 1 to 8, characterized in that the said locking means include at least one member (13) capable of projecting from the mandrel to penetrate into an opening (9) of the receiving cylinder.

10. Device according to the set of claims 8 and 9, characterized in that the said member is mounted for tilting inside the mandrel, provision being made for resilient means (18) for keeping it in the extracted position, and a piston (17) being arranged to return it into a retracted position against the action of the resilient means, the said piston being displaced under the effect of the pressure of a hydraulic fluid carried by a depositing line constituted by a flexible tubular conduit.

11. Device according to any one of claims 1 to 8, characterized in that the locking means include an annular groove (22) formed on the mandrel arranged to cooperate with latches (11) pivotably mounted on the receiving cylinder.

12. Device according to any one of claims 1 to 11, characterized in that it includes a cable (28) passing through the receiving cylinder and including at each one of its ends, fastening means (30, 31) capable of being respectively connected to the end of the mandrel and the end of a traction cable.

## Patentansprüche

1. Gerät zum Absetzen einer Last (3) auf dem Meeresboden und zu deren Rückholen, mit einer Leitung (5, 21) zum Manövrieren der Last von der Oberfläche aus, einem mit dem unteren Ende der Betätigungsleitung verbundenen ersten Bauteil, einem mit der Last (3) verbundenen, schwimmfähigen zweiten Bauteil (1) sowie mit dem ersten und dem zweiten Bauteil zusammenwirkenden Verriegelungseinrichtungen (9, 13; 11, 22), dadurch **gekennzeichnet**, daß zum Absetzen einer schweren Last (3) auf dem Meeresboden und zu deren Rückholen das zweite Bauteil (1) nahe dem Meeresboden angeordnet und mit der schweren Last (3) über eine längliche, biegsame Verbindungseinrichtung (2) mechanisch verbunden ist, wobei die schwere Last (3) dann, wenn sie sich auf dem Meeresboden befindet, einen das zweite Bauteil (1) über die Verbindungseinrichtung (2) nahe dem Meeresboden haltenden Ballast bildet, und daß das erste und das zweite Bauteil (4, 1) zylindrische Koppelglieder (8, 12) aufweisen, die sich derart ineinanderfügen und durch die Verriegelungseinrichtungen miteinander verriegeln lassen, daß die von dem ersten und dem zweiten Bauteil gebildete Einheit im zusammengesetzten Zustand das Gewicht der schweren Last zu tragen vermag, wenn diese durch Betätigung der Manövrierleitung zwischen dem Meeresboden und der Oberfläche bewegt wird.

2. Gerät nach Anspruch 1, dadurch gekennzeichnet, daß die durch den Angriffspunkt P und den Schwerpunkt G des zweiten Bauteils (1) verlaufende Achse parallel zu den Erzeugenden des zylindrischen Koppelgliedes verläuft und daß sich der Angriffspunkt P bezüglich des Schwerpunktes G am oberen Ende des zweiten Bauteils (1) befindet.

3. Gerät nach Anspruch 1 oder 2, dadurch gekennzeichnet, daß eines der Bauteile einen kreiszylindrischen Dorn (12, 20) und das andere einen Dorn-Aufnahmesockel (8) mit kreisförmiger Grundfläche zum Einfügen des Dorns in den Aufnahmezylinder aufweist, und daß die Verriegelungseinrichtungen (9, 13; 10, 11) an dem Dorn oder seinem Aufnahmezylinder zum Ver- und Entriegeln dieser Teile angeordnet sind.

4. Gerät nach Anspruch 3, dadurch gekennzeichnet, daß der Dorn an dem ersten Bauteil angebracht ist.

5. Gerät nach Anspruch 3, dadurch gekennzeichnet, daß der Dorn an dem zweiten Bauteil angebracht ist.

6. Gerät nach einem dem Ansprüche 1 bis 5, dadurch gekennzeichnet, daß das mit dem Aufnahmezylinder versehene Bauteil einen Eintrittskonus (7) für das anderen Bauteil aufweist.

7. Gerät nach den Ansprüchen 2 und 6, dadurch gekennzeichnet, daß der Eintrittskonus an dem zweiten Bauteil (1) angebracht ist.

8. Gerät nach einem der Ansprüche 1 bis 7, gekennzeichnet durch über die Betätigungsleitung mit Energie versorgte Verriegelungseinrichtungen.

9. Gerät nach den Ansprüchen 1 bis 8, dadurch gekennzeichnet, daß die Verriegelungseinrichtungen mindestens ein aus dem Dorn ausfahrbares Glied (13) zum Eingriff in eine Öffnung (9) in dem Aufnahmezylinder aufweisen.

10. Gerät nach den Ansprüchen 8 und 9, dadurch gekennzeichnet, daß das Glied im Innern des Dorns schwenkbar angebracht ist, daß eine elastische Einrichtung (18) vorgesehen ist, um das Glied in seiner ausgefahrenen Stellung zu halten, und daß ein Stößel (17) betätigbar ist, um das Glied gegen die Wirkung der elastischen Einrichtung in seine zurückgezogene Stellung zu führen, wobei der Stößel durch den Druck eines hydraulischen Strömungsmittels betätigbar ist, das über eine von einer flexiblen Rohrleitung gebildete Absetzleitung zugeführt wird.

11. Gerät nach einem der Ansprüche 1 bis 8, dadurch gekennzeichnet, daß die Verriegelungseinrichtungen eine an dem Dorn ausgebildete Ringnut (22) aufweisen, die so ausgeführt ist, daß sie mit an dem Aufnahmezylinder schwenkbar gelagerten Klinken (11) zusammenarbeitet.

12. Gerät nach einem der Ansprüche 1 bis 11, gekennzeichnet durch ein den Aufnahmezylinder durchsetzendes Kabel (28), das an seinen beiden Enden Einhakeinrichtungen (30, 31) zum Anschluß an das Ende des Dorns bzw. das Ende eines Zugkabels aufweist.
